# EUROPEAN PATENT APPLICATION

(11) **EP 4 601 394 A1**
(43) Date of publication of application: **13.08.2025**
(21) Application number: 23867516.9
(22) Date of filing: 19.09.2023
(51) Int. Cl.: H04W 74/08

(54) **METHOD AND APPARATUS FOR WIRELESS COMMUNICATION**

(30) Priority: 19.09.2022 CN 202211137379
(71) Applicant: Apogee Networks, LLC, Dallas, TX 75201 (US)
(72) Inventor: ZHANG, Xiaobo, Shanghai 201206 (CN)
(74) Representative: Gunzelmann, Rainer
(86) International application number: PCT/CN2023/119780
(87) International publication number: WO 2024/061229

(57) **Abstract**

The present invention discloses a method and apparatus for wireless communication. The method comprises: executing channel sensing on each channel in a first channel subset, wherein each channel in the first channel subset belongs to a first channel set; and in response to accessing each channel in the first channel subset, sending a first wireless signal on a first channel, wherein the first channel set is on a first carrier, the first channel set comprises a plurality of channels, any two channels in the first channel set do not overlap in a frequency domain, and the first channel subset depends on a time domain resource of the first wireless signal. By means of the present application, the efficiency of channel sensing can be improved, and the sending probability is improved.

## Description

### Technical Field

The present invention relates to a method and apparatus in a wireless communication system, and particularly relates to a method and apparatus for channel sensing in a wireless communication system.

### Background Art

In wireless communication based on shared spectrum, a transmitter needs to execute channel sensing or LBT (Listen Before Talk) before wireless sending to prevent interference with other communication devices. In addition, the channel sensing can be executed per channel or RB (Resource Block) set to maintain better compatibility.

FDD (Full Duplex Division) has become a research hotspot due to its ability to significantly improve spectrum efficiency, in which SBFD (SubBand Full Duplex) has particularly aroused research interest in the industry.

### Summary of the Invention

In NR (New Radio) systems, subband full duplex (SBFD) is proposed, that is, one communication device executes sending and receiving operations simultaneously on two subbands. Through research, the inventors found that in application scenarios such as SBFD, existing channel sensing solutions may no longer be applicable.

In response to the above problems, the present application discloses a solution. It should be noted that although the original intention of the present application is to make description for the SBFD scenario, the present application can also be used in non-SBFD scenarios. Furthermore, adopting a unified channel sensing solution is capable of reducing hardware complexity or signaling overhead or improving compatibility. In case of no conflict, the embodiments and features in the embodiments in any node of the present application may be applied to any other node. In case of no conflict, the embodiments and features in the embodiments in the present application may be arbitrarily combined with each other.

If necessary, reference may be made to 3GPP standards TS38.214, TS38.331, TS37.213, etc. to better understand the technical features in the present application.

The present application discloses a method used in a first node for wireless communication, comprising:
executing channel sensing on each channel in a first channel subset, wherein each channel in the first channel subset belongs to a first channel set; and
in response to accessing each channel in the first channel subset, sending a first wireless signal on a first channel,
wherein the first channel set is on a first carrier, the first channel set comprises a plurality of channels, any two channels in the first channel set do not overlap in a frequency domain, and the first channel subset depends on a time domain resource of the first wireless signal.

As one embodiment, the above method enables the first channel subset to vary along with the time domain resource of the first wireless signal, thereby improving the efficiency of channel sensing.

As one embodiment, the above method enables the first channel subset to vary along with the time domain resource of the first wireless signal, thereby increasing the probability of channel access.

As one embodiment, the first channel set is configurable.

As one embodiment, the first carrier is a carrier with one SCS (SubCarrier Spacing).

As one embodiment, the configuration of the first carrier is UE (User Equipment)-specific (specific).

As one embodiment, the configuration of the first carrier is in relation to Point A.

As one embodiment, a bandwidth occupied by the first carrier is a portion of a bandwidth of one serving cell.

As one embodiment, the first channel set is configured by RRC (Radio Resource Control) layer signaling.

As one embodiment, the first channel set is configured by *IntraCellGuardBandsPerSCS IE.*

As one embodiment, the first channel set is default, i.e., not explicitly configured.

As one embodiment, the behavior of in response to accessing each channel in the first channel subset, sending a first wireless signal on the first channel comprises: when the first node fails to access any channel in the first channel subset, the first node not sending on the first channel.

Specifically, according to one aspect of the present application, the above method is characterized by comprising:
operating a first message, the first channel set depending on the first message.

As one embodiment, the first node is user equipment, and the operation is receiving.

As one embodiment, the first node is a network device, and the operation is sending.

As one embodiment, the first message is an RRC message, and the first message explicitly or implicitly indicates the first channel set.

Specifically, according to one aspect of the present application, the above method is characterized by comprising:
operating a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

As one embodiment, the above method reduces the number of channels that need to execute channel sensing (when the second time domain resource overlaps at least partially with the first time domain resource), and increases the access probability.

As one embodiment, the second message is used to determine that frequency-division multiplexed uplink subbands and downlink subbands are present within the first time domain resource on the first carrier.

As one embodiment, the second message is used to determine that frequency-division multiplexed uplink subbands and downlink subbands are present within the first time domain resource in at least one BWP on the first carrier.

As one embodiment, the second message is used to indicate a first frequency domain resource, the first frequency domain resource is assigned to an opposite direction of a transmission direction of the first carrier within the first time domain resource, and the first frequency domain resource belongs to the first carrier.

As one embodiment, the transmission direction is downlink, and the opposite direction is uplink.

As one embodiment, the transmission direction is uplink, and the opposite direction is downlink.

As one embodiment, the second time domain resource is the time domain resource of the first wireless signal.

As one embodiment, the second time domain resource is before the time domain resource of the first wireless signal.

Specifically, according to one aspect of the present application, the above method is characterized in that the second time domain resource comprises time at which the channel sensing is executed on each channel in the first channel subset; and the time at which the channel sensing is executed on each channel in the first channel subset depends on the time domain resource of the first wireless signal.

The above method reduces the number of channels on which the first node executes channel sensing within the first time domain resource, and increases the access probability.

As one embodiment, the second time domain resource is a union set of time at which the channel sensing is executed on each channel in the first channel subset.

As one embodiment, the start time of the second time domain resource is the earliest time of the time at which the channel sensing is executed in the first channel subset, and the cutoff time of the second time domain resource is the latest time of the time at which the channel sensing is executed in the first channel subset.

As one embodiment, the second time domain resource is immediately before the start time of the first wireless signal.

As one embodiment, the second time domain resource is before the first wireless signal, and the time spacing between the second time domain resource and the start time of the first wireless signal is no more than 16 microseconds.

As one embodiment, the second time domain resource is before the first wireless signal, and the time spacing between the second time domain resource and the start time of the first wireless signal is no more than 9 microseconds.

Specifically, according to one aspect of the present application, the above method is characterized in that each channel in the first channel set is a resource block (RB) set, and the first channel set depends on the subcarrier spacing of the first carrier and the bandwidth of the first carrier.

As one embodiment, only when the first carrier is not configured with *IntraCellGuardBandsPerSCS,* the first channel subset depends on the time domain resource of the first wireless signal.

As one embodiment, only when an SCS for the first carrier is not configured with *IntraCellGuardBandsPerSCS,* the first channel subset depends on the time domain resource of the first wireless signal.

As one embodiment, the first node is UE, and the first node is not configured with *IntraCellGuardBandsPerSCS.*

As one embodiment, the first node is a base station, and the first node does not configure *IntraCellGuardBandsPerSCS* for the first carrier.

As one embodiment, the first carrier is not configured with *IntraCellGuardBandsPerSCS.*

Specifically, according to one aspect of the present application, the above method is characterized in that the operation is receiving and the first node is user equipment.

Specifically, according to one aspect of the present application, the above method is characterized in that the operation is sending and the first node is a base station.

The present application discloses a first node for wireless communication, comprising: a first receiver for executing channel sensing on each channel in a first channel subset, wherein each channel in the first channel subset belongs to a first channel set, and
a first transmitter for, in response to accessing each channel in the first channel subset, sending a first wireless signal on a first channel,
wherein the first channel set is on a first carrier, the first channel set comprises a plurality of channels, any two channels in the first channel set do not overlap in a frequency domain, and the first channel subset depends on a time domain resource of the first wireless signal.

Specifically, according to one aspect of the present application, the above method is characterized by comprising:
a first receiver for operating a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

### Brief Description of the Drawings

Other features, objects, and advantages of the present invention will become more apparent from the following detailed description of non-limiting embodiments with reference to the accompanying drawings:
FIG. 1 shows a flowchart of sending a first wireless signal according to one embodiment of the present invention;
FIG. 2 shows a schematic diagram of a network architecture according to one embodiment of the present invention;
FIG. 3 shows a schematic diagram of an embodiment of a radio protocol architecture of a user plane and a control plane according to one embodiment of the present invention;
FIG. 4 shows a schematic diagram of a hardware module of a communication node according to one embodiment of the present invention;
FIG. 5 shows a flowchart of transmission between a network device and user equipment according to one embodiment of the present invention;
FIG. 6 shows a schematic diagram of a first time domain resource according to one embodiment of the present invention; and
FIG. 7 shows a structural block diagram of a processing apparatus for a first node according to one embodiment of the present invention.

### Detailed Description of Embodiments

The technical solution of the present application will be further described in detail below in conjunction with the accompanying drawings. It should be noted that in case of no conflict, the embodiments and features in the embodiments in the present application may be combined with each other in any manner.

### Embodiment 1

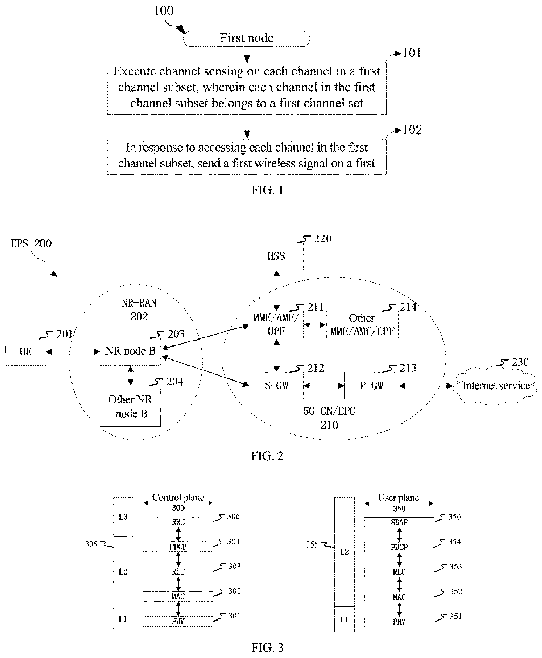

Embodiment 1 illustrates a flowchart of transmitting a first wireless signal according to one embodiment of the present application, as shown in FIG. 1.

A first node 100 executes channel sensing on each channel in a first channel subset, wherein in step 101, each channel in the first channel subset belongs to a first channel set; and in step S102, in response to accessing each channel in the first channel subset, a first wireless signal is sent on a first channel.

In Embodiment 1, the first channel set is on a first carrier, the first channel set comprises a plurality of channels, any two channels in the first channel set do not overlap in a frequency domain, and the first channel subset depends on a time domain resource of the first wireless signal.

As one embodiment, the channel sensing comprises sensing at least once whether the channel is idle.

As one embodiment, the channel sensing executed on each channel is used to determine whether to access on the channel.

As one embodiment, the first node 100 determines at least once that the channel is idle by the channel sensing on one channel immediately before determining to access the one channel.

As one embodiment, when the channel sensing executed on one channel is used to determine Q times that the channel is idle, the channel is considered accessible; and the Q is a positive integer, the Q being related to a type of a channel access procedure of the channel sensing.

As one embodiment, sensing whether the channel is idle is executed in one sensing slot duration.

As one embodiment, the length of the one sensing slot duration is 9 microseconds.

As one embodiment, the length of the one sensing slot duration is no more than 25 microseconds.

As one embodiment, sensing whether the channel is idle is executed in a defer duration.

As one embodiment, the length of the one defer duration is 25 microseconds.

As one embodiment, for one channel, if the energy detected by the first node on the channel is less than a first specific threshold in at least a portion of one sensing slot duration, the first node senses that the one sensing slot duration of the channel is idle.

As one embodiment, the at least a portion of the duration is less than the one sensing slot duration.

As one embodiment, the at least a portion of the duration is 4 microseconds.

As one embodiment, the channel sensing comprises sensing at least once whether the channel is idle in one defer duration.

As one embodiment, for one channel, if the first node senses that each sensing slot duration of at least one sensing slot duration in one defer duration on the channel is idle, the first node senses that the one defer duration of the channel is idle.

As one embodiment, the first specific threshold is configurable.

As one embodiment, the unit of the first specific threshold is dBm (millidecibel).

As one embodiment, the unit of the first specific threshold is mW (milliwatt).

As one embodiment, the first node is user equipment, and the channel sensing is a Type 1 UL channel access procedure or a Type 2 UL channel access procedure.

As one embodiment, the Type 2 UL channel access procedure is one of a Type 2A UL channel access procedure, a Type 2B UL channel access procedure, and a Type 2C UL channel access procedure.

As one embodiment, the first node is a network device, and the channel sensing is a Type 1 DL channel access procedure or a Type 2 DL channel access procedure.

As one embodiment, the type 2 DL channel access procedure is one of a type 2A DL channel access procedure, a type 2B DL channel access procedure, and a type 2C DL channel access procedure.

As one embodiment, the specific procedure of determining whether to access one channel through channel sensing may refer to the description in TS37.213.

As one embodiment, the first channel subset comprises a plurality of channels, and channel sensing executed on at least two of the plurality of channels is different channel access types.

As one embodiment, channel sensing executed on all channels in the first channel subset is the same channel access type.

As one embodiment, each channel in the first channel set is a resource block set, and the first channel set depends on a subcarrier spacing of the first carrier and a bandwidth of the first carrier.

As one embodiment, the first node is user equipment, the first node is scheduled to send the first wireless signal on at least the first channel.

As one embodiment, the first node is user equipment, and the first node intends to perform uplink sending on configured resources on at least the first channel.

As one embodiment, the first channel subset comprises the at least the first channel.

As one embodiment, the first node is user equipment, and the channel occupied by the first wireless signal comprises a PUSCH (Physical Uplink Shared Channel).

As one embodiment, the first node is user equipment, and the channel occupied by the first wireless signal comprises a PUCCH (Physical Uplink Control Channel).

As one embodiment, the first node is user equipment, and the first wireless signal comprises an SRS (Sounding Reference Signal).

As one embodiment, the first node is a base station, and the channel occupied by the first wireless signal comprises a PDSCH (Physical Downlink Shared Channel).

As one embodiment, the first node is a base station, and the channel occupied by the first wireless signal comprises a PDCCH (Physical Downlink Control Channel).

As one embodiment, the first node is a base station, and the first wireless signal comprises a CSI-RS (Channel Status Information Reference Signal).

As one embodiment, the first channel subset depends on the length of the time domain resource of the first wireless signal. The longer the length of the time domain resource of the first wireless signal, the larger the number of channels included in the first channel subset.

As one embodiment, the first channel subset depends on whether the time domain resource of the first wireless signal belongs to the first time domain resource; if the time domain resource of the first wireless signal does not belong to the first time domain resource, the first channel subset is the first channel set; and if the time domain resource of the first wireless signal belongs to a first time domain resource, the first channel subset is a proper subset of the first channel set.

### Embodiment 2

Embodiment 2 illustrates a schematic diagram of a network architecture according to one embodiment of the present application, as shown in FIG. 2. FIG. 2 illustrates a system architecture of 5G NR (NewRadio), LTE (Long-Term Evolution) and LTE-A (Long-Term Evolution Advanced). A 5G NR or LTE network architecture 200 may be referred to as a 5GS (5GSystem)/EPS (Evolved Packet System) or some other suitable terms. The EPS 200 may comprise UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown, the EPS provides packet switching services, however those skilled in the art will readily understand that various concepts presented throughout the present application may be extended to networks or other cellular networks that provide circuit switching services. The NG-RAN comprises an NR node B (gNB) 203 and other gNB204. The gNB203 provides user and control plane protocol termination toward the UE201. The gNB203 may be connected to the other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP or some other suitable terms. The gNB203 provides the UE201 with access points to the EPC/5G-CN 210. Examples of the UE201 comprise a cellular telephone, a smart phone, a session initiation protocol (SIP) telephone, a laptop, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband IoT device, a machine type communication device, a land transportation vehicle, an automobile, a wearable device, or any other similar functional apparatuses. The UE201 may also be referred to by those skilled in the art as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client or some other suitable terms. The gNB203 is connected to the EPC/5G-CN 210 through an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. In general, the MME/AMF/UPF211 provides bearer and connection management. All user IP (Internet Protocol) packets are transmitted through the S-GW212, and the S-GW212 is connected to the P-GW213 itself. The P-GW213 provides UE IP address allocation and other functions. The P-GW213 is connected to the Internet service 230. The Internet service 230 comprises an operator-corresponding Internet protocol service, which may specifically comprise the Internet, intranet, IMS (IP Multimedia Subsystem), and packet switching streaming services.

As one embodiment, the UE201 corresponds to the first node in the present application, and the gNB203 corresponds to the second node in the present application.

As one embodiment, the UE201 supports LAA (Licensed Assistant Access) or shared spectrum.

As one embodiment, the gNB203 supports LAA (Licensed Assistant Access) or shared spectrum.

As one embodiment, the gNB203 is a network device.

As one embodiment, the gNB203 is a MarcoCellular base station.

As one embodiment, the gNB203 is a micro cell base station.

As one embodiment, the gNB203 is a PicoCell base station.

As one embodiment, the gNB203 is a Femtocell.

As one embodiment, the gNB203 is a base station device that supports large latency differences.

As one embodiment, the gNB203 is a flight platform device.

As one embodiment, the gNB203 is a satellite device.

As one embodiment, the first node in the present application is the UE201 or the gNB203.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture of a user plane 350 and a control plane 300, and FIG. 3 shows a radio protocol architecture of a control plane 300 between a first node device (UE or RSU in V2X, vehicle-mounted device or vehicle-mounted communication module) and a second node device (gNB UE or RSU in V2X, vehicle-mounted device or vehicle-mounted communication module), or between two pieces of UE using three layers: Layer 1, Layer 2, and Layer 3. The Layer 1 (L1 layer) is the lowest layer and implements various signal processing functions of a PHY (physical layer). The L1 layer will be referred to as PHY301 herein. The Layer 2 (L2 layer) 305 is above the PHY301, and is responsible for the link between the first node device and the second node device and between two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second node device. The PDCP sublayer 304 provides data encryption and integrity protection, and the PDCP sublayer 304 also provides handover support for the first node device to the second node device. The RLC sublayer 303 provides segmentation and reorganization of data packets, and retransmission of lost data packets is implemented through ARQ. The RLC sublayer 303 also provides duplicate data packet detection and protocol error detection. The MAC sublayer 302 provides mapping between the logic and transmission channels and multiplexing of logical channels. The MAC sublayer 302 is also responsible for allocating various radio resources (e.g., resource blocks) in one cell between the first node devices. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearer) and configuring a lower layer using RRC signaling between the second node device and the first node device. The radio protocol architecture of the user plane 350 comprises the Layer 1 (L1 layer) and the Layer 2 (L2 layer), and the radio protocol architecture for the first node device and the second node device in the user plane 350 is substantially the same as the corresponding layers and sublayers in control plane 300 with respect to the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for an upper layer data packet to reduce wireless sending overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support service diversity. Although not shown, the first node device may have several upper layers above the L2 layer 355, comprising a network layer (e.g., an IP layer) terminated at the P-GW on a network side and an application layer terminated at the other terminal of a connection (e.g., a remote UE, a server, etc.).

As one embodiment, the radio protocol architecture in FIG. 3 is applicable to the first node in the present application.

As one embodiment, the first message in the present application is generated in the RRC sublayer 306.

As one embodiment, the second message in the present application is generated in the RRC sublayer 306.

### Embodiment 4

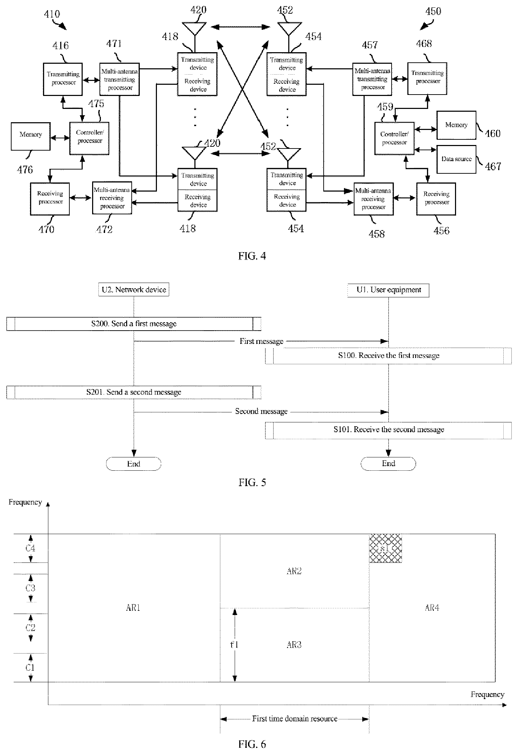

Embodiment 4 shows a schematic diagram of a hardware module of a communication node according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In transmission from the second communication device 410 to the first communication device 450, the controller/processor 475 provides header compression, encryption, packet segmentation and reordering, multiplexing between logic and transmission channels, and radio resource allocation of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements channel encoding and interleaving to facilitate forward error correction (FEC) at the second communication device 410, and mapping of signal clusters based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding of the encoded and modulated symbols, comprising codebook-based precoding and non-codebook-based precoding, and beamforming processing to generate one or more spatial streams. The transmitting processor 416 then maps each spatial stream to a subcarrier, multiplexes with a reference signal (e.g., a pilot frequency) in a time domain and/or frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to a radio frequency carrier, and converts the radio frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a Fast Fourier Transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, wherein the reference signal is used for channel estimation, and the data signal recovers any spatial stream with the first communication device 450 as a destination after multi-antenna detection in the multi-antenna receiving processor 458. Symbols on each spatial stream are demodulated and recovered in the receiving processor 456 and generate soft decisions. The receiving processor 456 then performs deinterleaving and channel decoding on the soft decisions to recover upper-layer data and control signals transmitted by the second communication device 410 on the physical channel. The upper-layer data and the control signals are then provided to the controller/processor 459. The controller/processor 459 implements the function of the L2 layer. The controller/processor 459 may be associated with a memory 460 storing a program code and data. The memory 460 may be referred to as a computer-readable medium. In transmission from the second communication device 410 to the second node 450, the controller/processor 459 provides demultiplexing, packet reassembly, decryption, header decompression, and control signal processing between the transmission and logical channels to recover the upper-layer data packet from the core network. The upper-layer data packet is then provided to all protocol layers above the L2 layer. Various control signals may also be provided to L3 for L3 processing.

In transmission from the first communication device 450 to the second communication device 410, at the first communication device 450, a data source 467 is used to provide the upper-layer data packet to the controller/processor 459. The data source 467 represents all the protocol layers above the L2 layer. Similar to the sending function at the second communication device 410 described in transmission from the second communication device 410 to the first communication device 450, the controller/processor 459 implements header compression, encryption, packet segmentation and reordering, and multiplexing between the logic and transmission channels based on wireless resource allocation, thereby implementing the function of the L2 layer for the user plane and the control plane. The controller/processor 459 is also responsible for retransmission of lost packets and signaling to the second communication device 410. The transmitting processor 468 executes channel encoding, interleaving, and modulation mapping, the multi-antenna transmitting processor 457 performs digital multi-antenna spatial precoding, comprising codebook-based precoding and non-codebook-based precoding, and beamforming processing, and the transmitting processor 468 then modulates the generated spatial stream into a multi-carrier/single-carrier symbol stream, and then provides it to different antennas 452 via the transmitting device 454 after the analog precoding/beamforming operations in the multi-antenna transmitting processor 457. Each transmitting device 454 first converts the baseband symbol stream provided by the multi-antenna transmitting processor 457 into a radio frequency symbol stream, and then provides it to the antenna 452.

In transmission from the first communication device 450 to the second communication device 410, the function at the second communication device 410 is similar to the receiving function at the first communication device 450 described in transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the function of the L2 layer. The controller/processor 475 may be associated with a memory 476 storing a program code and data. The memory 476 may be referred to as a computer-readable medium. In transmission from the first communication device 450 to the second communication device 410, the controller/processor 475 provides demultiplexing, packet reassembly, decryption, header decompression, and control signal processing between the transmission and logical channels to recover the upper-layer data packet from the UE450. The upper-layer data packet from the controller/processor 475 may be provided to the core network.

As one embodiment, the first communication device 450 apparatus comprises: at least one processor and at least one memory, the at least one memory comprising a computer program code; the at least one memory and the computer program code are configured to be used with the at least one processor, the first communication device 450 apparatus at least: executes channel sensing on each channel in a first channel subset, wherein each channel in the first channel subset belongs to a first channel set; and in response to accessing each channel in the first channel subset, sends a first wireless signal on a first channel, wherein the first channel set is on a first carrier, the first channel set comprises a plurality of channels, any two channels in the first channel set do not overlap in a frequency domain, and the first channel subset depends on a time domain resource of the first wireless signal.

As one embodiment, the first communication device 450 comprises: a memory storing a computer-readable instruction program that generates an action when being executed by at least one processor, the action comprising: executing channel sensing on each channel in a first channel subset, wherein each channel in the first channel subset belongs to a first channel set; and in response to accessing each channel in the first channel subset, sending a first wireless signal on a first channel.

As one embodiment, the second communication device 410 apparatus comprises: at least one processor and at least one memory, the at least one memory comprising a computer program code; and the at least one memory and the computer program code are configured to be used with the at least one processor. The second communication device 410 apparatus at least: executes channel sensing on each channel in a first channel subset, wherein each channel in the first channel subset belongs to a first channel set; and in response to accessing each channel in the first channel subset, sends a first wireless signal on a first channel.

As one embodiment, the second communication device 410 apparatus comprises: a memory storing a computer-readable instruction program that generates an action when being executed by at least one processor, the action comprising: executing channel sensing on each channel in a first channel subset, wherein each channel in the first channel subset belongs to a first channel set; and in response to accessing each channel in the first channel subset, sending a first wireless signal on a first channel.

As one embodiment, the first communication device 450 corresponds to the first node in the present application.

As one embodiment, the second communication device 410 corresponds to the first node in the present application.

As one embodiment, the first communication device 450 is a piece of UE, and the second communication device 410 is a base station.

As one embodiment, the antenna 452, the receiving device 454, the multi-antenna receiving processor 458, the receiving processor 456, and the controller/processor 459 are used to receive the first message.

As one embodiment, the antenna 452, the receiving device 454, the multi-antenna receiving processor 458, the receiving processor 456, and the controller/processor 459 are used to receive a second message.

As one embodiment, the antenna 452, the transmitting device 454, the multi-antenna transmitting processor 457, the transmitting processor 468, and the controller/processor 459 are used to send the first wireless signal.

As one embodiment, the antenna 420, the transmitting device 418, the multi-antenna transmitting processor 471, the transmitting processor 416, and the controller/processor 475 are used to send the first message.

As one embodiment, the antenna 420, the transmitting device 418, the multi-antenna transmitting processor 471, the transmitting processor 416, and the controller/processor 475 are used to send a second message.

As one embodiment, the antenna 420, the receiving device 418, the multi-antenna receiving processor 472, the receiving processor 470, and the controller/processor 475 are used to send the first wireless signal.

### Embodiment 5

Embodiment 5 illustrates a flowchart of transmission between a network device and user equipment according to one embodiment of the present application, as shown in FIG. 5.

The network device U2 sends a first message in step S200, the first channel set depending on the first message; and the network device sends a second message in step S201, the second message being used to indicate a first time domain resource.

The user equipment U1 receives the first message in step S100 and receives the second message in step S101.

In Embodiment 5, when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

As one embodiment, the first message is higher-level signaling.

As one embodiment, the first message explicitly indicates the first channel set.

As one embodiment, the first message is *IntraCellGuardBandsPerSCS.*

As one sub-embodiment of the above embodiment, any channel in the first channel set is a portion between two guard bands indicated by the first message, or a portion between the boundary of the first carrier and one guard band indicated by the first message.

As one embodiment, a specific description of the solution using *IntraCellGuardBandsPerSCS* indication channel (i.e., RB set) may refer to Chapter 7 of TS38.214.

As one embodiment, the first message implicitly indicates the first channel set.

As one sub-embodiment of the above embodiment, the first message is *ServingCellConfig* IE (Information Element).

As one embodiment, the first message indicates a first SCS (subcarrier spacing) and a bandwidth of a first carrier, and the first channel set depends on the first SCS and the bandwidth of the first carrier.

As one sub-embodiment of the above embodiment, the first message is SCS-SpecificCarrier IE, and the first SCS and the bandwidth of the first carrier are indicated by a subcarrierSpacing field and a carrierBandwidth field in the SCS-SpecificCarrier IE, respectively.

As one sub-embodiment of the above embodiment, the first node is the user equipment U2, and the first message is *FrequencyInfoUL* IE.

As one sub-embodiment of the above embodiment, the first node is the user equipment U2, and the first message is *FrequencyInfoUL-SIB* IE.

As one sub-embodiment of the above embodiment, the first node is the base station device U1, and the first message is *FrequencyInfoDL* IE.

As one sub-embodiment of the above embodiment, the first node is the base station device U1, and the first message is *FrequencyInfoDL-SIB* IE.

As one sub-embodiment of the above embodiment, the first channel set is determined by a table lookup method.

As one embodiment, the table lookup method adopts the following table:

| **SC S (k Hz )** | **40 MHz (megahertz)** | **60 MHz** | **80 MHz** |
|---|---|---|---|
| 15 | 105-6-105 (216) | N/A | N/A |
| 30 | 50-6-50 (106) | 50-6-50-6-50 (162) | 50-6-50-5-50-6-50 (217) |
| 60 | 23-5-23 (51) | 23-5-23-5-23 (79) | 23-5-23-5-23-5-23 (107) |
| Note: The intra-cell guard band is represented as TBW₀-GB₀-...-GB_{N_RBset-2}-TBW_{N_RBset-1}, wherein N_RBset > 1, which is the number of RB set (i.e., channel), TBWᵣ is the maximum transmission bandwidth of RB set r (the unit is a physical resource block), and GBᵣ is the guard band above the upper edge of the RB-set r (the unit is a physical resource block). RB set 0 starts at the first common resource block of the first carrier, and the first common resource block is indicated by *offsetToCarrier.* | | | |

As one embodiment, the second message is RRC signaling.

As one embodiment, the second message is MAC CE (Control Element) signaling.

As one embodiment, the second message comprises a first bitmap, each bit in the first bitmap indicates whether one time slot or subframe within a period belongs to the first time domain resource.

As one embodiment, the second message indicates a start time slot and a cutoff time slot of the first time domain resource within a period.

As one embodiment, the second message indicates a start symbol and a cutoff symbol of the first time domain resource within a period.

As one embodiment, at least a portion of the channels in the first channel set are not suitable to be assigned to sending of the first node in the first time domain resource.

As one embodiment, channel sensing in the first time domain resource on at least a portion of the channels in the first channel set faces interference.

As one embodiment, the interference comprises cross link interference.

As one embodiment, the interference comprises interference between inter radio access technologies.

As one embodiment, the second time domain resource comprises the time domain resource of the first wireless signal.

As one embodiment, the second time domain resource comprises a time domain resource occupied by channel sensing executed for sending the first wireless signal.

As one embodiment, the time domain resource of the first wireless signal comprises a duration of at least one symbol.

As one embodiment, the symbol is an OFDM (Orthogonal Frequency Division Multiplexing) symbol.

As one embodiment, the symbol is a DFT (Discrete Fourier Transformation)-S (spreading)-OFDM symbol.

As one embodiment, the second message indicates a first frequency domain resource; and when the second time domain resource overlaps at least partially with the first time domain resource, any channel in the first channel set that overlaps with the first frequency domain resource does not belong to a first sub-channel set.

As one embodiment, the second message indicates a first frequency domain resource; and when the second time domain resource overlaps at least partially with the first time domain resource, the first sub-channel set is composed of all channels in the first channel set that do not overlap with the first frequency domain resource.

As one embodiment, the first frequency domain resource comprises a plurality of RBs (resource blocks).

As one embodiment, the first frequency domain resource comprises a plurality of RBs (resource blocks) consecutively in the frequency domain.

### Embodiment 6

Embodiment 6 illustrates a schematic diagram of a first time domain resource according to one embodiment of the present application, as shown in FIG. 6. In FIG. 6, C1, C2, C3 and C4 identify 4 channels in a first channel set, respectively, and a small square filled with cross lines is occupied by the first wireless signal.

In Embodiment 6, a first node operates a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

As one embodiment, the second time domain resource is a time domain resource occupied by the first wireless signal. As shown in FIG. 6, the time domain resource occupied by the first wireless signal (a small square filled with cross lines identified by S1) does not overlap with the first time domain resource, so that the first channel subset is the first channel set.

As one embodiment, the second time domain resource is a time domain resource occupied for channel sensing of the first wireless signal; and as shown in FIG. 6, since the time domain resource occupied for channel sensing of the first wireless signal is immediately before the first wireless signal, the time domain resource occupied for channel sensing of the first wireless signal overlaps with the first time domain resource, that is, the first channel subset is a proper subset of the first channel set.

As one embodiment, when the second time domain resource overlaps at least partially with the first time domain resource, the first channel subset depends on the second message.

As one embodiment, when the second time domain resource overlaps at least partially with the first time domain resource, the first channel subset is a channel occupied by the first wireless signal (as shown by C4 in FIG. 6).

As one embodiment, the second message indicates a first frequency domain resource (as shown by a frequency domain arrow f1 in FIG. 6), and when the second time domain resource overlaps at least partially with the first time domain resource, channels (C1 and C2 in FIG. 6) in the first channel set that overlap with the first frequency domain resource (even partially) do not belong to the first channel subset.

As one embodiment, the second message indicates a first frequency domain resource (as shown by a frequency domain arrow f1 in FIG. 6), and when the second time domain resource overlaps at least partially with the first time domain resource, all channels in the first channel set that do not overlap with the first frequency domain resource constitute the first channel subset (C3 and C4 in FIG. 6).

As one sub-embodiment of the above embodiments, the first channel subset comprises at least one channel not occupied by the first wireless signal.

As one embodiment, the first wireless signal is a first direction, and the second message indicates that a first time frequency resource (as shown by a square identified by AR3 in FIG. 6) is used in a second direction; and the first direction is downlink and the second direction is uplink, or the first direction is uplink and the second direction is downlink.

As one sub-embodiment of the above embodiment, for the sake of simplicity, a guard band in a first time resource is not identified in FIG. 6, the guard band being used to isolate interference in the first direction and the second direction.

As one embodiment, a square identified by AR2 is used in the first direction.

As one embodiment, both a square identified by AR1 and a square identified by AR4 are used in the first direction.

### Embodiment 7

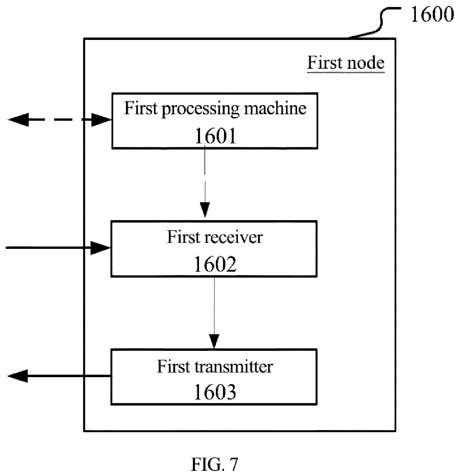

Embodiment 7 illustrates a structural block diagram of a processing apparatus for a first node according to one embodiment of the present application, as shown in FIG. 7. In FIG. 7, the processing apparatus 1600 in the first node comprises a first processing machine 1601, a first receiver 1602, and a first transmitter 1603.

The first processing machine 1601 operates a first message, the first channel set depending on the first message. The first receiver 1602 executes channel sensing on each channel in a first channel subset, wherein each channel in the first channel subset belongs to a first channel set. The first transmitter 1603, in response to accessing each channel in the first channel subset, sends a first wireless signal on a first channel.

In Embodiment 7, the first channel set is on a first carrier, the first channel set comprises a plurality of channels, any two channels in the first channel set do not overlap in a frequency domain, and the first channel subset depends on a time domain resource of the first wireless signal.

As one embodiment, when the first node fails to access any channel in the first channel subset, the first node does not send on the first channel.

As one embodiment, the first processing machine 1601 operates a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

As one embodiment, the first node 1600 is UE, and the operation is receiving.

As one embodiment, the first node 1600 is a network device, and the operation is sending.

As one embodiment, the second time domain resource comprises time at which the channel sensing is executed on each channel in the first channel subset; and the time at which the channel sensing is executed on each channel in the first channel subset depends on the time domain resource of the first wireless signal.

As one embodiment, each channel in the first channel set is a resource block set, and the first channel set depends on a subcarrier spacing of the first carrier and a bandwidth of the first carrier.

As one embodiment, the first channel subset comprises at least one channel not occupied by the first wireless signal.

As one embodiment, the first node 1600 is UE, the operation is receiving, and the first processing machine 1601 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first node 1600 is a network device, the operation is sending, and the first processing machine 1601 comprises an antenna 420, a transmitting device 418, a multi-antenna transmitting processor 471, a transmitting processor 416, a controller/processor 475, and a memory 476 in FIG. 4 of the present application.

As one embodiment, the first transmitter 1603 comprises at least one of an antenna 452, a transmitting device/receiving device 454, a multi-antenna transmitting device processor 457, a transmitting processor 468, a controller/processor 459, a memory 460, and a data source 467 in FIG. 4 of the present application.

As one embodiment, the first transmitter 1603 comprises an antenna 452, a transmitting device/receiving device 454, a multi-antenna transmitting device processor 457, a transmitting processor 468, a controller/processor 459, a memory 460, and a data source 467 in FIG. 4 of the present application.

As one embodiment, the first receiver 1602 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1602 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1602 comprises at least the first three of an antenna 452, a receiving device 454, a multi-antenna receiving processor 458, a receiving processor 456, a controller/processor 459, a memory 460, and a data source 467 in FIG. 4 of the present application.

Those of ordinary skill in the art will appreciate that all or part of the steps in the above method may be completed by a program instructing relevant hardware, and the program may be stored in a computer-readable storage medium, such as a read-only memory, a hard disk or an optical disk. Optionally, all or part of the steps of the above embodiments may also be implemented using one or more integrated circuits. Correspondingly, each module unit in the above embodiments may be implemented in a hardware form or in a software functional module form. The present application is not limited to any specific form of combination of software and hardware. The user equipment, the terminal and the UE of the present application include, but are not limited to, an unmanned aerial vehicle, a communication module on the unmanned aerial vehicle, a remote control aircraft, an aircraft, a light aircraft, a mobile phone, a tablet computer, a laptop, a vehicle-mounted communication device, a wireless sensor, a network card, an IoT terminal, an RFID terminal, an NB-IOT terminal, a MTC (Machine Type Communication) terminal, an eMTC (enhanced MTC) terminal, a data card, a network card, a vehicle-mounted communication device, a low-cost mobile phone, a low-cost tablet computer, and other wireless communication devices. The base station or network equipment in the present application includes, but is not limited to, a macro cellular base station, a micro cellular base station, a Femtocell, a relay base station, a gNB NR Node B, a TRP (Transmitter Receiver Point), and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meanings and areas are considered to have been included therein.

## Claims

1. A first node for wireless communication, comprising:
a first receiver for executing channel sensing on each channel in a first channel subset, wherein each channel in the first channel subset belongs to a first channel set, and
a first transmitter for, in response to accessing each channel in the first channel subset, sending a first wireless signal on a first channel,
wherein the first channel set is on a first carrier, the first channel set comprises a plurality of channels, any two channels in the first channel set do not overlap in a frequency domain, and the first channel subset depends on a time domain resource of the first wireless signal.

2. The first node according to claim 1, comprising:
a first processing machine for operating a first message, the first channel set depending on the first message,
wherein the operation is receiving, or the operation is sending.

3. The first node according to claim 1 or 2, comprising:
a first processing machine for operating a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

4. The first node according to any one of claims 2-3, wherein the operation is receiving and the first node is user equipment, or the operation is sending and the first node is a base station.

5. The first node according to any one of claims 1-4, wherein the second time domain resource comprises time at which the channel sensing is executed on each channel in the first channel subset; and the time at which the channel sensing is executed on each channel in the first channel subset depends on the time domain resource of the first wireless signal.

6. The first node according to any one of claims 1-5, wherein each channel in the first channel set is one resource block set, and the first channel set depends on a subcarrier spacing of the first carrier and a bandwidth of the first carrier.

7. A method used in a first node for wireless communication, comprising:
executing channel sensing on each channel in a first channel subset, wherein each channel in the first channel subset belongs to a first channel set; and
in response to accessing each channel in the first channel subset, sending a first wireless signal on a first channel,
wherein the first channel set is on a first carrier, the first channel set comprises a plurality of channels, any two channels in the first channel set do not overlap in a frequency domain, and the first channel subset depends on a time domain resource of the first wireless signal.

8. The method used in the first node according to claim 7, comprising:
operating a first message, the first channel set depending on the first message.

9. The method used in the first node according to claim 7 or 8, comprising:
operating a second message, the second message being used to indicate a first time domain resource,
wherein the operation is receiving, or the operation is sending; when a second time domain resource does not overlap with the first time domain resource, the first channel subset is the first channel set; when the second time domain resource overlaps at least partially with the first time domain resource, the first channel subset is a proper subset of the first channel set; and the second time domain resource depends on the time domain resource of the first wireless signal.

10. The method used in the first node according to any one of claims 8-9, wherein the operation is receiving and the first node is user equipment, or the operation is sending and the first node is a base station.

11. The method used in the first node according to claim 8 or 10, wherein the second time domain resource comprises time at which the channel sensing is executed on each channel in the first channel subset; and the time at which the channel sensing is executed on each channel in the first channel subset depends on the time domain resource of the first wireless signal.

12. The method used in the first node according to any one of claims 8-11, wherein each channel in the first channel set is one resource block set, and the first channel set depends on a subcarrier spacing of the first carrier and a bandwidth of the first carrier.
